Europäisches Patentamt

(19) European Patent Office

Office européen des brevets

(11) Publication number: **0 093 618**
**B1**

# (12) EUROPEAN PATENT SPECIFICATION

(45) Date of publication of patent specification: **12.11.86**

(51) Int. Cl.⁴: **B 01 D 59/20**

(21) Application number: **83302498.7**

(22) Date of filing: **04.05.83**

(54) **Multistage method and apparatus for separating substances of different atomic weights using a plasma centrifuge.**

(30) Priority: **05.05.82 US 375097**

(43) Date of publication of application:
**09.11.83 Bulletin 83/45**

(45) Publication of the grant of the patent:
**12.11.86 Bulletin 86/46**

(84) Designated Contracting States:
**DE FR GB NL SE**

(56) References cited:
**FR-A-2 412 339**
**FR-A-2 441 412**

**NUCLEAR INSTRUMENTS & METHODS IN PHYSICS RES., vol. 186, nos. 1,2, July 1981, pages 183-187, North-Holland Publishing Company, Amsterdam, NL., M. GEVA et al.:**

**"Centrifugal mass separation in laser-initiated vacuum arcs"**

(73) Proprietor: **YALE UNIVERSITY**
**451 College Street**
**New Haven Connecticut 06510 (US)**

(72) Inventor: **Hirshfield, Jay L.**
**55 Killdeer Road**
**Hamden Connecticut 06517 (US)**
Inventor: **Krishnan, Mahadevan**
**P.O.Box 605 Yale Station**
**New Haven Connecticut 06520 (US)**

(74) Representative: **Newstead, Michael John et al**
**Haseltine Lake & Co. 28 Southampton Buildings**
**Chancery Lane**
**London, WC2A 1AT (GB)**

## Description

The present invention is directed to a method and apparatus for separating substances of different atomic weights using a plasma centrifuge and more particularly, to a multistage method and apparatus wherein a laser initiated vacuum arc is used to fully ionize and form a plasma of the substances to be separated.

The separation of substances having different atomic weights by rotating a plasma including these substances is known in the prior art. In the prior art techniques, a neutral gas, including the substances to be separated, is ionized by passing an electric current therethrough. These prior art gas discharge plasmas are, however, only partially ionized. Thus, although the ionized plasma component responds to electric and magnetic fields which rotate the plasma, the drag due to the neutral atoms within and around the spinning plasma limits the rotation rates and hence, the degree of mass separation achievable in such prior art centrifuges. The neutral atom viscosity results in plasma rotation rates well below the Alfven critical velocity with corresponding low mass separation. In a partially ionized plasma, the Alfven velocity limit is reached when the rotational energy of the ions equals the ionization energy of the neutral atoms. Further energy input to the rotating plasma then goes primarily into the ionization of the residual neutrals.

Since the centrifugal force applied to the substances of different atomic weights is a function of the rotational speed, the limitations on the rotational speed caused by the drag of the neutral atoms substantially reduces the centrifugal force and, therefore, the separating capability of the prior art devices.

In an article entitled "Centrifugal mass separation in laser-initiated vacuum arcs" published in "Nuclear Instruments & Methods in Physics Res.", vol. 186, Nos. 1, 2, July 1981, pages 183—187, North Holland Publishing Company, Amsterdam, NL, M. Geva et al, there are described a method and apparatus for separating substances of different atomic weights using a plasma centrifuge. The method and apparatus disclosed use a single separation technique in which the substances to be separated are collected on a collector. This technique has the disadvantage that enrichment of the separated materials after the single separation may not be sufficient for commercial use. Thus, it is necessary to remove the enriched material from the collector, form a new target and repeat the separation. This has to be done several times for commercial purposes. The repeating of this separation technique is expensive and time consuming.

In accordance with one aspect of the present invention there is provided an apparatus for centrifugally separating substances of different atomic weights, said apparatus comprising:

vessel means having a longitudinal axis;

vacuum means for creating a vacuum in said vessel;

magnetic field generating means for generating a magnetic field in said vessel means parallel to the longitudinal axis of said vessel means;

target means comprised of said substances, said target means being positioned within said vessel means at one end thereof;

collector means position within said vessel means at the other end thereof;

laser means for focusing laser energy onto said target means and thereby ionizing at least a portion of said substances and forming a plasma therefrom; and

power supply means connected to said target means for providing an electric current thereto wherein the current flow through said target means causes the further ionization of said substances and thereby the formation of additional plasma therefrom;

wherein, in use, the plasma or additional plasma is rotated and moved from the target means to said collector means by the magnetic field whereby at least a portion of said ionized substances are separated by the centrifugal force resulting from the rotation thereof;

characterised in that at least one skimmer means is positioned in said vessel means in the path of a portion of the plasma or additional plasma such that the portion of the plasma or additional plasma strikes said skimmer means and is collected thereon and the remainder of the plasma or additional plasma continues moving along said vessel towards said collector.

In accordance with another aspect of the present invention there is provided a method of separating substances of different atomic weights, said method comprising the steps of:

placing said substances in a vacuum;

focusing laser energy onto said substances and the ionized portion thereof to form a plasma;

passing a current through said substances and the ionized portion thereof for further ionizing said substances and thereby forming additional plasma therefrom; and

applying a magnetic field to said plasma or additional plasma for rotating the plasma or additional plasma and moving that plasma in a direction away from the un-ionized portion of said substances, wherein the rotation of that plasma centrifugally separates at least a portion of said substances;

characterised by the steps of passing said plasma or additional plasma through at least one skimmer means such that a portion of said centrifugally separated plasma is collected on the or each of said skimmer means; and

depositing said centrifugally separated and skimmed ionized plasma on a collector.

In an embodiment of the present invention, the substances to be separated are positioned in an evacuated vessel which has a longitudinal axis. A magnetic field is generated in the vessel parallel to the longitudinal axis of the vessel and a target comprised of the substances to be separated is positioned within the vessel at one end thereof, and a collector is positioned at the other end of the vessel. Pulsed laser energy is focused on the substances to be separated, thereby completely ionizing at least a portion of the substances and forming a plasma therefrom. Immediately following the arrival of the laser energy, a current is passed through the substances to be separated, which causes further complete ionization of the substances and thereby the formation of additional plasma. The completely ionized plasma is rotated and moved from the target of substances which are to be separated towards a collector by the application of the magnetic field. At least a portion of the ionized substances are separated by the centrifugal force resulting from the rotation of the plasma by the magnetic field. A plurality of skimmers are positioned in the vessel between the target and the collector such that a portion of the rotating plasma strikes the skimmer and is collected thereon. The remainder of the plasma continues moving towards the collector. The material which finally strikes the collector is only a percentage of the starting material, but it is highly enriched or concentrated.

For a better understanding of the present invention, and to show how the same may be carried into effect, reference will now be made, by way of example, to the accompanying drawings in which:—

Figure 1 is a schematic diagram of a plasma centrifuge of the present invention;

Figure 2A is an enlarged view of a portion of the apparatus shown in Figure 1;

Figure 2B shows the shape of the axial magnetic field on the periphery of the plasma arc in Figure 2A;

Figure 3 is a graph of the Number of Stages of Separation vs. Beta; and

Figure 4 is an alternative embodiment of the skimmer of the present invention.

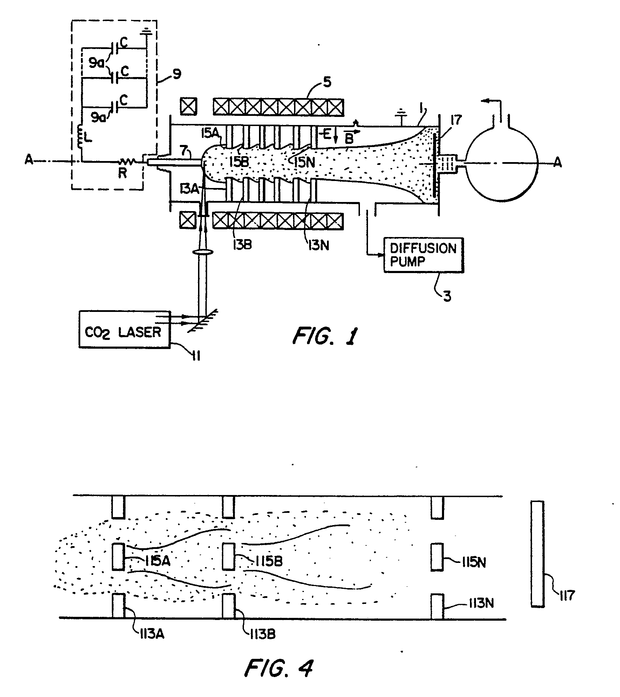

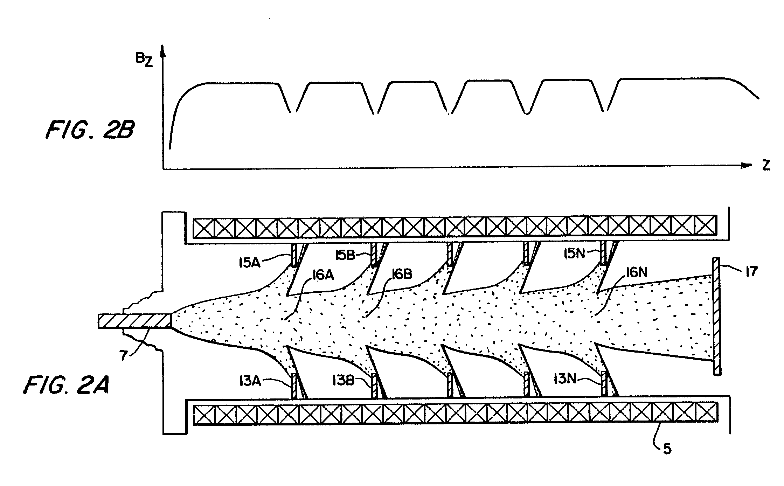

Referring to Figures 1 and 2, a vessel 1 is evacuated using a diffusion pump 3. Electromagnetic coils 5 surround the vessel 1 which may, for example, be cylindrical in shape. The axis of the coils 5 corresponds to the longitudinal axis A—A of the vessel 1. A solid target 7 including the materials to be separated is positioned at one end of the vessel and one terminal of a power supply 9 is connected thereto. In the preferred embodiment, the target is a solid. The use of a solid target in a vacuum facilitates the creation of a fully ionized plasma. However, a liquid or gas target could be used. A laser 11 is focused on the target 7 so that the laser energy therefrom may be applied to the target 7.

In operation, the laser 11 is pulsed and the pulsed laser energy is focused on the target 7. The laser may, for example, be a pulsed laser. The laser pulse causes a portion of the target to ionize and form a plasma. During and subsequent to the laser pulse, the charge stored on capacitors 9a of capacitor discharge power supply 9 is discharged through the target 7, causing a current to flow therethrough. This current further ionizes a portion of the substances to be separated and thereby further increases the plasma. At the end of the current discharge from the power supply 9 through target 7, the laser 11 is pulsed again and then the power supply is discharged again in repeating cycles.

The plasma creates an electric field E having a direction radially inward. Further, the flow of current across the magnetic field B produced by the magnetic coils 5 produces a Lorentz body force on the plasma, which acts to spin or rotate the plasma column about the longitudinal axis A—A. Further, the magnetic field confines the plasma to the central portion of the vessel and still further, causes the plasma to flow towards end plate collector 17. Because the plasma is spinning or rotating, the substance of a heavier atomic weight will tend to move radially outward as a result of a greater centrifugal force being applied thereto as compared to the substance of the lighter atomic weight.

A plurality of auxiliary magnetic coils or iron rings 13a, 13b. . .13n are positioned in the vessel 1 at predetermined intervals along the path of the ionized plasma as it travels from the target 7 towards the collector 17. As the rotating plasma moves radially outward, hhe outer portion thereof strikes portions 15a of the skimmer 13a. That part of the plasma which strikes portion 15a and is collected thereon is enriched in the heavier of the materials in the plasma because of the centrifugal force of the rotating plasma. That part of the plasma which passes through the center opening 16a of skimmer 13a is thus enriched in the lighter materials. After passing through skimmer 13a, the plasma continues to rotate and again is forced centrifugally outwards by the rotation thereof. The plasma then strikes skimmer 13b and again material is removed which is more concentrated in the higher weight material with a further enriched or concentrated lower, weight material passing through the opening 16b and moving to the third stage. The continual enrichment continues through the various stages until, after passing through the final skimmer 13n, the plasma is collected on collector 17.

Figure 2B is a graph showing the shape of the axial magnetic field on the periphery of the plasma arc. As can be seen, there is dip in the magnetic field at each skimmer 13. This dip causes a slight expansion of the plasma as it passes through the openings in the center of the skimmers 13.

As can be seen, since part of the material forming the plasma is collected on each of the skimmers, the amount of material which reaches the collector is less than the original starting material. The amount of material which reaches the collector is called the "cut". In general, as the number of stages increases, the cut increases for a fixed enrichment; or the enrichment will go up and the cut remain fixed as the number of stages increases. Further, the fraction of material collected on each skimmer is a function of

$1-(R_a/R_w)^2$, where $R_a$ is the annulus radius and $R_w$ is the wall radius.

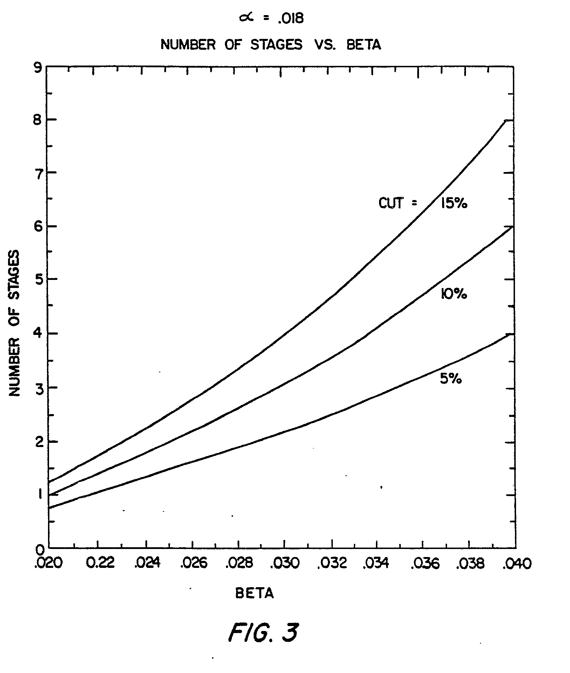

Figure 3 is a graph illustrating the number of stages versus $\beta$, where $\beta$ is the reciprocal of the square of the mean radius of the plasma column.

The embodiment shown in Figures 1 and 2 is used when it is desired to enrich or concentrate a lower atomic weight material in the starting material or target. As can be seen, it is the heavier atomic weight material which is removed by the skimmers, and thus, a lower atomic weight material is enriched on the collector. When, however, it is desired to enrich the heavier atomic weight material which is in the target, a different shaped skimmer must be used. Referring to Figure 4, an alternative embodiment is shown in which each skimmer 113a, 113b...113n comprises an outer annular portion and a center portion 115a, 115b...115n. As the plasma rotates, the heavier material moves outward to a greater degree than the light material and, therefore, as the plasma passes through a skimmer 113a, the lighter material at the center of the plasma arc strikes portion 115a of the skimmer 113a and is collected thereon. Thus, after passing through skimmer 113a, the plasma is more concentrated in the higher atomic weight material. After passing through the skimmer, some of the material will move inwards towards the center. However, the rotation of the plasma will again tend to move the heavier material towards the outer portion of the rotating plasma arc. As the arc moves towards the collector 117, it will pass through skimmer 113b. Again the lighter materials which are more concentrated at the center of the plasma, because of the rotation of the plasma, will strike portions 115b of skimmer 113b and be collected thereon. The plasma continues to be separated by additional stages until it has passed through skimmer 113n, after which it is collected on collector 117.

It should be noted that initially when the plasma is formed, the lighter and heavier materials are randomly distributed throughout the plasma. As the plasma rotates, the heavier material tends to move towards the outer portion and the lighter material tends to remain in the center portion of the plasma. However, it should be understood that movement of all of the heavier material to the outer portion of the plasma and concentration of all of the lighter materials in the center of the plasma is merely an ideal situation and that in reality, there are, of course, significant amounts of the heavier material in the center portion of the plasma and lighter material in the outer portion of the plasma. Thus, when the plasma strikes the end plate collector after passing through a series of separation stages, while the total material collected is indeed enriched in the heavier or lighter substance (depending on which embodiment is used), there is, in addition, a greater concentration of the heavier substance towards the radially outward portion of the end plate collector and a resulting greater concentration of the lighter substance at the radially inward portion of the end plate collector. Further separation is thereby effected by increasing concentrations of one of the substances as compared to another at differing radial portions of the end plate collector.

In the above-described embodiments of the multistage method and apparatus for the separation of substances of different atomic weights, the plasma, including the substances to be separated, is fully ionized, thereby reducing drag when the plasma is rotated by the application of a magnetic force thereto, and several stages of separation are effected, while the fully ionized rotating plasma travels from its source to the collector for collecting the separated substances.

**Claims**

1. An apparatus for centrifugally separating substances of different atomic weights, said apparatus comprising:
   vessel means (1) having a longitudinal axis;
   vacuum means (3) for creating a vacuum in said vessel;
   magnetic field generating means (5) for generating a magnetic field in said vessel means (1), parallel to the longitudinal axis of said vessel means;
   target means (7) comprised of said substances, said target means being positioned within said vessel means (1) at one end thereof;
   collector means (17) positioned within said vessel means at the other end thereof;
   laser means (11) for focusing laser energy onto said target means and thereby ionizing at least a portion of said substances and forming a plasma therefrom; and
   power supply means (9) connected to said target means for providing an electric current thereto wherein the current flow through said target means (7) causes the further ionization of said substances and thereby the formation of additonal plasma therefrom;
   wherein, in use, the plasma or additional plasma is rotated and moved from the target means (7) to the collector means (17) by the magnetic field whereby at least a portion of said ionized substances are separated by the centrifugal force resulting from the rotation thereof;
   characterised in that at least one skimmer means (13) is positioned in said vessel means in the path of a portion of the plasma or additional plasma such that the portion of the plasma or additional plasma strikes said skimmer means and is collected thereon and the remainder of the plasma or additional plama continues moving along said vessel towards said collector.

2. An apparatus as claimed in claim 1, wherein said skimmer means comprises an annular member in said vessel, the axis of said annular member coinciding with the axis of said magnetic field generating means.

3. An apparatus as claimed in claim 2, wherein said skimmer comprises an annular member of a disc, said disc being positioned in the space of the center of said annular member wherein the radius of said disc is less than the inner radius of said annular member and the axes of said disc and said annular member coincide with the axis of said magnetic field generating means.

4. An apparatus as claimed in any one of claims 1 to 3, wherein said skimmer means is an iron ring.

5. An apparatus as claimed in any one of claims 1 to 3, wherein said skimmer means is a magnetic coil.

6. A method of separating substances of different atomic weights, said method comprising the steps of:

placing said substances in a vacuum;

focusing laser energy onto said substances for ionizing a portion thereof to form a plasma;

passing a current through said substances and the ionized portion thereof for further ionizing said substances and thereby forming additional plasma therefrom; and

applying a magnetic field to said plasma or additional plasma for rotating the plasma or additional plasma and moving that plasma in a direction away from the un-ionized portion of said substances, wherein the rotation of that plasma centrifugally separates at least a portion of said substances;

characterised by the steps of passing said plasma or additional plasma through at least one skimmer means such that a portion of said centrifugally separated plasma is collected on the or each of said skimmer means; and depositing said centrifugally separated and skimmed plasma on a collector.

7. A method as claimed in claim 6, including weakening said magnetic field as said plasma or additional plasma passes through said skimmer means.

8. A method as claimed in claim 6, including collecting the central portion of said centrifugally separated plasma or additional plasma on said skimmer means.

9. A method as claimed in claim 6, including collecting the outer portion of said centrifugally separated plasma or additional plasma on said skimmer means.

**Patentansprüche**

1. Vorrichtung zur zentrifugalen Trennung verschiedene Atomgewichte aufweisender Substanzen mit

einer ein Längsachse aufweisenden Gefäßeinrichtung (1),

einer Vakuumeinrichtung (3) zur Erzeugung eines Vakuums in Gefäß

einer sich parallel zur Längsachse der Gefäßeinrichtung erstrekkenden Einrichtung (5) zur Erzeugung eines Magnetfeldes in der Gefäßeinrichtung (1),

einer aus den genannten Substanzen bestehenden, innerhalb der Gefäßeinrichtung (1) an einem Ende derselben angeordneten Zieleinrichtung (7),

einer innerhalb der Gefäßeinrichtung an dessen gegenüberliegendem Ende angeordneten Sammlereinrichtung (17),

einer Lasereinrichtung (11), die Laserenergie auf die Zieleinrichtung richtet, so daß sie mindestens einen Teil der Substanzen ionisiert und daraus ein Plasma bildet,

einer mit der Zieleinrichtung verbundenen Stromversorgungseinrichtung (9), um diese mit elektrischem Strom zu versorgen, wobei der Fluß des Stromes durch die Zieleinrichtung (7) die weitere Ionisierung der Substanzen verursacht, so daß zusätzliches Plasma daraus gebildet wird,

wobei im Betrieb durch das Magnetfeld das Plasma oder das zusätzliche Plasma zur Rotation gebracht und von der Zieleinrichtung (7) in Richtung auf die Sammlereinrichtung (17) bewegt wird, so daß mindestens ein Teil der ionisierten Substanzen durch die von deren Rotation herrührende Zentrifugalkraft getrennt wird, dadurch gekennzeichnet, daß mindestens eine Schöpfeinrichtung (13) innerhalb der Gefäßeinrichtung in der Bewegungslinie eines Plasmateils oder eines Teils des zusätzlichen Plasmas angeordnet ist, so daß ein Teil des Plasmas oder des zusätzlichen Plasmas die Schöpfeinrichtung beaufschlagt und darauf gesammelt wird, während das übrige Plasma oder das übrige zusätzliche Plasma weiter sich in Richtung auf den Sammler bewegt.

2. Vorrichtung nach Anspruch 1, worin die Schöpfeinrichtung ein ringförmiges Glied umfaßt, dessen Achse mit der Achse der Einrichtung zur Erzeugung eines Magnetfeldes zusammenfällt.

3. Vorrichtung nach Anspruch 2, worin die Schöpfeinrichtung ein ringförmiges Glied und eine Scheibe umfaßt, die im Bereich des Zentrums des ringförmigen Gliedes angeordnet ist, worin der Radius der Scheibe kleiner ist als der Innenradius des ringförmigen Gliedes und worin die Achsen der Scheibe und des ringförmigen Gliedes mit der Achse der Einrichtung zur Erzeugung des Magnetfeldes zusammenfallen.

4. Vorrichtung nach einem der Asprüche 1 bis 3, worin die Schöpfeinrichtung als Eisenring ausgebildet ist.

5. Vorrichtung nach einem der Ansprüche 1 bis 3, worin die Schöpfeinrichtung als Induktionsspule ausgebildet ist.

6. Verfahren zur Trennung von verschiedene Atomgewichte aufweisenden Substanzen, das in folgenden Stufen durchgeführt wird:

—Einführen der Substanzen in ein Vakuum,

—Richten von Laserenergie auf die Substanzen, um unter Bildung eines Plasmas einen Teil derselben zu ionisieren,

—Fließenlassen eines Stromes durch die Substanzen und durch deren ionisierten Teil, um die Substanzen zusätzlich zu ionisieren, wodurch aus diesen zusätzliches Plasma gebildet wird, sowie

—Beaufschlagen des Plasmas oder des zusätzlichen Plasmas mit einem Magnetfeld, um dasselbe zum Rotieren zu bringen sowie

—Verschieben dieses Plasmas von dem nicht ionisierten Teil der Substanzen weg, wobei das Rotieren dieses Plasmas mindestens einen Teil der Substanzen zentrifugal trennt, gekennzeichnet durch die Schritte:

—Transportieren des Plasmas oder des zusätzlichen Plasmas durch mindestens ein Schöpfeinrichtung hindurch, so daß ein Teil des zentrifugal gentrennten Plasmas auf der oder auf jeder Schöpfeinrichtung gesammelt wird, und

—Ablegen des zentrifugal getrennten und abgeschöpften Plasmas auf einem Sammler.

7. Verfahren nach Anspruch 6, worin das Magnetfeld dann abgeschwächt wird, wenn das Plasma oder das zusätzliche Plasma die Schöpfeinrichtung passiert.

8. Verfahren nach Anspruch 6, worin zumindest der mittlere Teil des zentrifugal getrennten Plasmas oder des zusätzlichen Plasmas an der Schöpfeinrichtung gesammelt wird.

9. Verfahren nach Anspruch 6, worin zumindest der äußere Teil des zentrifugal getrennten Plasmas oder des zusätzlichen Plasmas an der Schöpfeinrichtung gesammelt wird.

**Revendications**

1. Appareil pour séparer par centrifugation des substances de poids atomiques différents, ledit appareil comprenant:

un moyen formant récipient (1) ayant un axe longitudinal;

un moyen à vide (3) pour créer un vide dans le récipient;

un moyen (5) de production de champ magnétique pour créer un champ magnétique dans le récipient (1) parallèlement à l'axe longitudinal du récipient;

une cible (7) composée desdites substances, la cible étant placée dans le récipient (1) à une extrémité de celui-ci;

un collecteur (17) placé dans le récipient à l'autre extrémité de celui-ci;

un moyen (11) à laser pour concentrer l'énergie d'un laser sur la cible et ioniser ainsi au moins une partieu desdites substances et former un plasma à partir d'elles; et

un moyen (9) d'alimentation électrique relié à la cible pour fournir à celle-ci un courant électrique, dans lequel le passage de courant à travers la cible provoque encore l'ionisation desdites substances et ainsi la formation de plasma supplémentaire à partir de celles-ci;

dans lequel, en fonctionnement, le plasma ou le plasma supplémentaire est mis en rotation et déplacé de la cible (7) jusqu'au collecteur (17) par le champ magnétique, grâce à quoi au moins une partie des substances ionisées sont séparées par la force centrifuge résultant de la rotation de celui-ci;

caractérisé en ce qu'au moins un écrémeur (13) est placé dans le récipient sur le parcours d'une partie du plasma ou du plasma supplémentaire de façon que la partie du plasma ou du plasma supplémentaire heurte l'écrémeur et soit recueillie sur celui-ci et que le reste du plasma ou du plasma supplémentaire continue à se déplacer le long du récipient vers le collecteur.

2. Appareil selon la revendication 1, dans lequel ledit écrémeur comporte un élément annulaire dans le récipient, l'axe de l'élément annulaire coïncidant avec l'axe dudit moyen de production de champ magnétique.

3. Appareil selon la revendication 2, dans lequel l'écrémeur comporte un élément annulaire et un disque, le disque étant placé dans l'espace du centre de l'élément annulaire où le rayon du disque est plus petit que le rayon intérieur de l'élément annulaire et les axes du disque et de l'élément annulaire coïncident avec l'axe du moyen de production de champ magnétique.

4. Appareil selon l'une quelconque des revendications 1 à 3, dans lequel l'écrémeur est un anneau en fer.

5. Appareil selon l'une quelconque des revendications 1 à 3, dans lequel l'écrémeur est une bobine magnétique.

6. Procédé pour la séparation de substances de poids atomiques différents, ce procédé comportant les opérations suivantes:

mise sous vide des substances;

concentration d'énergie laser sur les substances afin de les ioniser en partie pour former un plasma;

passage d'un courant à travers les substances et la partie ionisée de celles-ci pour encore ioniser les substances et former ainsi à partir d'elles du plasma supplémentaire; et

application d'un champ magnétique au plasma ou au plasma supplémentaire pour faire tourner le plasma ou le plasma supplémentaire et déplacer ce plasma en l'éloignant de la partie non ionisée des substances, dans lequel la rotation de ce plasma sépare par centrifugation au moins une partie des substances;

caractérisé par les étapes de passage du plasma ou du plasma supplémentaire à travers au moins un écrémeur de façon qu'une partie du plasma séparé par centrifugation soit recueillie sur le collecteur ou sur chaque collecteur;

et de dépôt sur un collecteur du plasma ionisé séparé par centrifugation et écrémé.

7. Procédé selon la revendication 6, comportant l'affaiblissement du champ magnétique quand le plasma ou le plasma supplémentaire passe à ' avers l'écrémeur.

8. Procédé selon la revendication 6, comportant la récupération, sur l'écrémeur, de la partie centrale du plasma ou du plasma supplémentaire séparé par centrifugation.

9. Procédé selon la revendication 6, comportant la récupération, sur l'écrémeur, de la partie extérieure du plasma ou du plasma supplémentaire séparé par centrifugation.

FIG. 1

FIG. 4

FIG. 2B

FIG. 2A

2

$\alpha = .018$

NUMBER OF STAGES VS. BETA

*FIG. 3*